# EUROPEAN PATENT APPLICATION

(11) **EP 2 352 335 A1**
(43) Date of publication of application: **03.08.2011**
(21) Application number: 09824850.3
(22) Date of filing: 06.11.2009
(51) Int. Cl.: H04W 36/08, H04W 48/10

(54) **MOBILE STATION AND MOBILE COMMUNICATION METHOD**

(30) Priority: 07.11.2008 JP 2008287109
(71) Applicant: NTT DOCOMO, INC., Chiyoda-ku Tokyo 100-6150 (JP)
(72) Inventor: YAMAGISHI, Hiroaki, Tokyo 100-6150 (JP)
(74) Representative: HOFFMANN EITLE
(86) International application number: PCT/JP2009/068976
(87) International publication number: WO 2010/053151

(57) **Abstract**

A mobile station (UE) according to the present invention includes: a control unit (12) configured to acquire predetermined information from handover information and to continue a communication in a second cell by using the acquired predetermined information, when reception of at least one portion of broadcast information by a reception unit (12) is failed.

## Description

### TECHNICAL FIELD

The present invention relates to a mobile station and a mobile communication method.

### BACKGROUND ART

In mobile communication systems of the LTE (Long Term Evolution) scheme defined in the 3GPP, a mobile station UE under a communication (RRC_CONNECTED state) is configured to receive broadcast information including MIB (Master Information Block, primary information block), SIB1 (System Information Block 1, first system information block) and SIB2 (System Information Block 2, second system information block) in the second cell, and to continue the communication based on the information, etc., included in the MIB, the SIB1, and the SIB2, when performing a handover from a first cell to the second cell.

### SUMMARY OF THE INVENTION

### PROBLEMS TO BE SOLVED BY THE INVENTION

However, in a mobile communication system of the current LTE scheme, there is a problem in that when a mobile station UE under a communication fails to receive the broadcast information in the second cell that is a handover-target cell, it is not defined how the mobile station UE should operate, and therefore, the communication cannot be continued.

Therefore, the present invention is intended to overcome the above-described problem. An object of the present invention is to provide a mobile station and a mobile communication method capable of continuing a communication even if reception of broadcast information is failed in a second cell at the time of a handover from a first cell to the second cell.

### MEANS FOR SOLVING THE PROBLEM

A first aspect of the present invention is summarized as a mobile station configured to communicate in each cell by using predetermined information, including: a reception unit configured to receive broadcast information in a second cell after a handover from a first cell to the second cell in response to received handover information; and a control unit configured to continue the communication in the second cell by using the predetermined information included in the received broadcast information, wherein the control unit is configured to acquire the predetermined information from the handover information and to continue the communication in the second cell by using the acquired predetermined information, when the reception of at least one portion of the broadcast information by the reception unit is failed.

A second aspect of the present invention is summarized as a mobile communication method in which a mobile station communicates in each cell by using predetermined information, the method including the steps of : (A) receiving, at the mobile station, broadcast information in a second cell after a handover from a first cell to the second cell in response to received handover information; (B) continuing, at the mobile station, the communication in the second cell by using the predetermined information included in the received broadcast information; and (C) acquiring, at the mobile station, the predetermined information from the handover information, and continuing, at the mobile station, the communication in the second cell by using the acquired predetermined information, when the reception of at least one portion of the broadcast information is failed.

A third aspect of the present invention is summarized as a mobile station configured to communicate in each cell by using predetermined information, including: a reception unit configured to receive broadcast information in a second cell after a handover from a first cell to the second cell in response to received handover information; and a control unit configured to continue the communication in the second cell by using the predetermined information included in the received broadcast information, wherein the control unit is configured to continue the communication in the second cell by using the predetermined information that has been used in the first cell, when the reception of at least one portion of the broadcast information by the reception unit is failed.

A fourth aspect of the present invention is summarized as a mobile station configured to communicate in each cell by using predetermined information, including: a reception unit configured to receive broadcast information in a second cell after a handover from a first cell to the second cell in response to received handover information; and a control unit configured to continue the communication in the second cell by using the predetermined information included in the received broadcast information, wherein the control unit is configured to continue the communication in the second cell by using the predetermined information that is determined beforehand, when the reception of at least one portion of the broadcast information by the reception unit is failed.

A fifth aspect of the present invention is summarized as a mobile communication method in which a mobile station communicates in each cell by using predetermined information, the method including the steps of: receiving, at the mobile station, broadcast information in a second cell after a handover from a first cell to the second cell in response to received handover information; continuing, at the mobile station, the communication in the second cell by using the predetermined information included in the received broadcast information; and acquiring, at the mobile station, the predetermined information from the handover information, and continuing, at the mobile station, the communication in the second cell by using the predetermined information that has been used in the first cell, when the reception of at least one portion of the broadcast information is failed.

A sixth aspect of the present invention is summarized as a mobile communication method in which a mobile station communicates in each cell by using predetermined information, the method including the steps of: receiving, at the mobile station, broadcast information in a second cell after a handover from a first cell to the second cell in response to received handover information; continuing, at the mobile station, the communication in the second cell by using the predetermined information included in the received broadcast information; and acquiring, at the mobile station, the predetermined information from the handover information, and continuing, at the mobile station, the communication in the second cell by using the predetermined information that is determined beforehand, when the reception of at least one portion of the broadcast information is failed.

### EFFECT OF THE INVENTION

As explained above, according to the present invention, it is possible to provide a mobile station and a mobile communication method capable of continuing a communication even if reception of broadcast information is failed in a second cell at the time of a handover from a first cell to the second cell.

### BRIEF DESCRIPTION OF THE DRAWINGS

[Fig. 1] Fig. 1 is a diagram showing the entire configuration of a mobile communication system according to a first embodiment of the present invention.
[Fig. 2] Fig. 2 is a functional block diagram of a mobile station according to the first embodiment of the present invention.
[Fig. 3] Fig. 3 is a flowchart illustrating an operation of the mobile station according to the first embodiment of the present invention.

### BEST MODES FOR CARRYING OUT THE INVENTION

### (Configuration of mobile communication system according to first embodiment of the present invention)

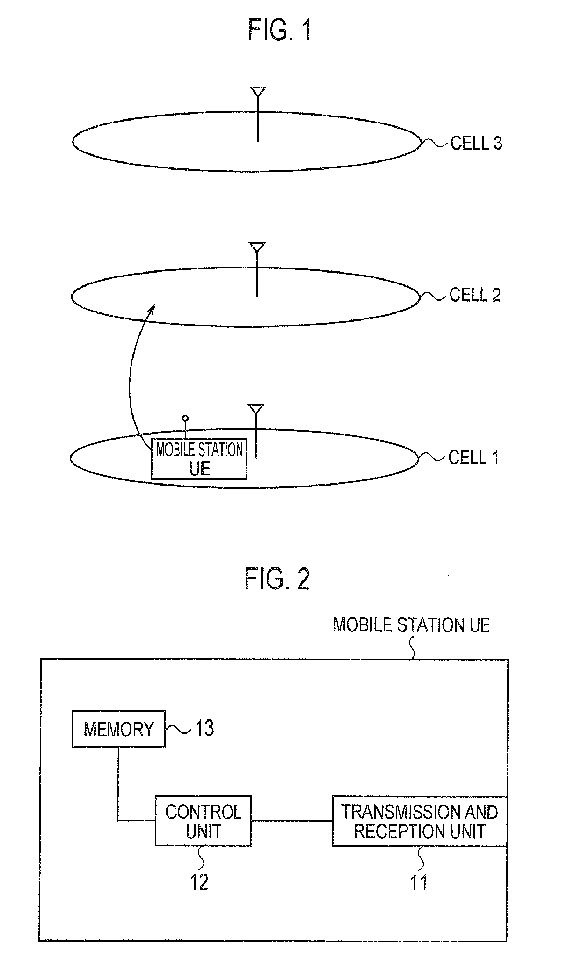

With reference to Fig. 1 to Fig. 3, the configuration of a mobile communication system according to a first embodiment of the present invention will be explained.

With reference to Fig. 1 and Fig. 2, the configuration of the mobile communication system according to the first embodiment of the present invention will be explained.

As illustrated in Fig. 1, the mobile communication system according to the embodiment is, for example, a mobile communication system of an LTE scheme, and is to include a cell 1, a cell 2, and a cell 3.

Hereinafter, in the embodiment, an example in which a mobile station UE hands over from the cell 1 (first cell) to the cell 2 (second cell) is explained.

As illustrated in Fig. 2, the mobile station UE includes a transmission and reception unit 11, a control unit 12, and a memory 13.

The transmission and reception unit 11 is configured to perform a communication with a radio base station eNB that manages each cell, via a radio link.

Specifically, the transmission and reception unit 11 is configured to receive, in response to a command from a control unit 12, broadcast information (for example, MIB, SIB1, and SIB2) transmitted in the cells where the mobile station UE is located. It is noted that the broadcast information is configured by the MIB, the SIB1, the SIB2, etc.

For example, the transmission and reception unit 11 is configured to receive, after the mobile station UE performs handover from the cell 1 to the cell 2, the MIB included in broadcast information in the cell 2, to receive the SIB1 included in the broadcast information based on information included in the MIB, and to receive the SIB2 included in the broadcast information based on scheduling information included in the SIB1.

It is noted that the transmission and reception unit 11 may be configured to repeatedly attempt to receive the broadcast information during a time from a time when it was not possible to firstly receive the above-mentioned broadcast information to a predetermined period elapses (a time when predetermined timer expires)

Moreover, the transmission and reception unit 11 may be configured to repeatedly attempt to receive the broadcast information a predetermined number of times only, when the above-mentioned broadcast information cannot be firstly received.

In the broadcast information, predetermined information necessary for the mobile station UE to continue a communication in a handover-target cell (in this embodiment, the cell 2) is included.

For example, in the predetermined information, a network ID (for example, PLMN (Public Land Mobile Network) -ID) , a vocation registration area ID (for example, TA (Tracking Area)-ID), or a cell ID relating to the cell 2 may be included.

Moreover, in the predetermined information, information indicating a setting value of various timers used in the cell 2 ("ue-TimersAndConstants" defined in the 3GPP), e.g., information indicating a setting value of a timer T300, a setting value of a timer T301, a setting value of a timer T310, a setting value of a timer T311, etc., may be included.

Further, in the predetermined information, information necessary to receive an emergency paging signal (for example, ETWS (Earthquake and Tsunami Warning System) paging signal) may be included.

Moreover, in the predetermined information, a reception cycle ("Modification Period" defined in the 3GPP) of the broadcast information may be included.

The control unit 12 is configured to perform a handover process, a reconnection process, etc. Moreover, the control unit 12 is configured to perform a reception process on the broadcast information received by the transmission and reception unit 11, and to store the broadcast information in a memory 13 after performing the reception process.

In this case, the control unit 12 is configured to perform a process so that the mobile station UE performs handover from the cell 1 to the cell 2, in response to a handover command (handover information) received from the radio base station eNB.

Moreover, the control unit 12 is configured to continue a communication in the cell 2 by using the predetermined information included in the broadcast information, when reception of the broadcast information by the transmission and reception unit 11 is succeeded.

It is noted that the control unit 12 is configured to acquire the predetermined information from the handover command so as to continue the communication in the cell 2 by using the acquired predetermined information, when the reception of at least one portion of the broadcast information by the transmission and reception unit 11 is failed.

In this case, a case considered that the "reception of at least one portion of the broadcast information by the transmission and reception unit 11 is failed" includes a "case where the transmission and reception unit 11 fails to receive the MIB", a "case where the transmission and reception unit 11 succeeds in receiving the MIB, and thereafter, fails to receive the SIB1", a "case where the transmission and reception unit 11 succeeds in receiving the MIB and the SIB1, and thereafter, fails to receive the SIB2", a "case where the transmission and reception unit 11 succeeds in receiving the MIB and the SIB1, and thereafter, the scheduling information about the SIB2 is not included in the SIB1", etc.

Moreover, the control unit 12 may be configured to determine that the reception of the broadcast information by the transmission and reception unit 11 is failed, when the transmission and reception unit 11 does not succeed in receiving the broadcast information within a predetermined period.

Alternately, the control unit 12 may be configured to determine that the reception of the broadcast information by the transmission and reception unit 11 is failed, when the transmission and reception unit 11 does not succeed in receiving the broadcast information in spite of a predetermined number of times of attempts to receive the broadcast information.

It is noted that when the MIB, the SIB1, or the SIB2 is not transmitted in the cell 2, the control unit 12 may be also configured to determine that the reception of the broadcast information by the transmission and reception unit 11 is failed.

Moreover, the control unit 12 may be configured to continue the communication in the cell 2 by using the predetermined information used in the cell 1, when the reception of at least one portion of the broadcast information by the transmission and reception unit 11 is failed, and when the acquisition of the predetermined information from the handover command is failed.

Further, the control unit 12 may be configured to continue the communication in the cell 2 by using the predetermined information that is determined beforehand (for example, a fixed value within the mobile communication system, a fixed value for each mobile station, etc.), when the reception of at least one portion of the broadcast information by the transmission and reception unit 11 is failed, and when the acquisition of the predetermined information from the handover command is failed.

For example, the control unit 12 may be configured to determine a reception cycle of the broadcast information by the transmission and reception unit 11, based on the predetermined information ("Modification Period" defined in the 3GPP).

Further, the control unit 12 may be configured to cause the transmission and reception unit 11 to receive an emergency paging signal (for example, an ETWS paging signal) based on the predetermined information.

Moreover, the control unit 12 may be configured to determine the setting value of the timer, based on the predetermined information ("ue-TimersAndConstants" defined in the 3GPP).

The memory 13 is configured to hold the broadcast information received by the transmission and reception unit 11, for example. In this case, the memory 11 may be configured to hold predetermined information used in the cell 1 (i.e. , a cell of a handover source) or predetermined information that is determined beforehand (described later).

### (Operation of the mobile communication system according to the first embodiment of the present invention)

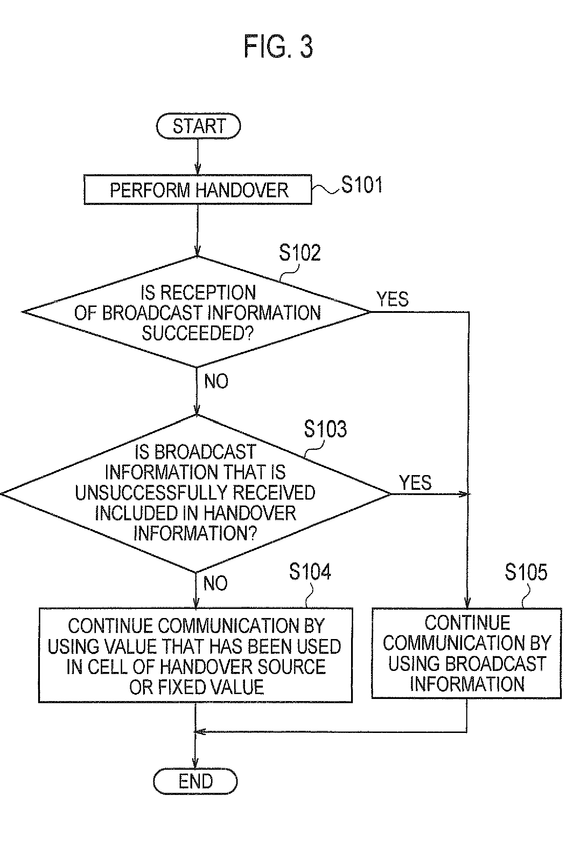

With reference to Fig. 3, the operation of the mobile communication system according to the first embodiment of the present invention, specifically, the operation of the mobile station UE used in the mobile communication system according to the first embodiment of the present invention, will be explained.

As illustrated in Fig. 3, in step S101, the mobile station UE performs a handover from the cell 1 to the cell 2.

In step S102, the mobile station UE performs a reception process on the broadcast information such as the MIB, the SIB1, and the SIB2. When such a reception process is succeeded, the operation proceeds to step S105, and when the reception process is failed, the operation proceeds to step S103.

In step S103, the mobile station UE attempts to acquire the predetermined information failed to receive in step S102, from the handover command. When the acquisition is succeeded, the present operation proceeds to step S105, and when the acquisition is failed, the present operation proceeds to step S104.

In step S104, the mobile station UE continues the communication by using the predetermined information that has been used in the cell 1 or the predetermined information that is determined beforehand.

In step S105, the mobile station UE continues the communication in the cell 2 by using the acquired predetermined information, etc.

It is noted that in the above-mentioned operations, the process in step S103 may not be performed.

### (Operation and Effect of the mobile communication system according to the first embodiment of the present invention)

Based on the mobile communication system according to the first embodiment of the present invention, even if the reception of the broadcast information is failed in the handover-target cell, the mobile station UE can continue the communication by using the predetermined information included in the handover command, the predetermined information that has been used in the handover-source cell, or the predetermined information that is determined beforehand.

The above-mentioned aspects of the embodiments may be expressed as follows:

A first aspect of the embodiment is summarized as a mobile station UE configured to communicate in each cell by using predetermined information (for example, a cell 1 to a cell 3), including: a transmission and reception unit 11 configured to receive broadcast information (for example, MIB, SIB1, and SIB2) in a cell 2 (second cell), and to perform a handover from the cell 1 (first cell) to the cell 2 in response to received handover information (for example, a handover command) , and; and a control unit 12 configured to continue the communication in the cell 2 by using predetermined information included in the received broadcast information, wherein the control unit 12 is configured to acquire the predetermined information from the handover information and to continue the communication in the cell 2 by using the acquired predetermined information, when the reception of at least one portion of the broadcast information by the transmission and reception unit 11 is failed.

In the first aspect of the embodiment, the control unit 12 may be configured to continue the communication in the cell 2 by using the predetermined information used in the cell 1, when the reception of at least one portion of the broadcast information by the transmission and reception unit 11 is failed, and when the acquisition of the predetermined information from the handover information is failed.

In the first aspect of the embodiment, the control unit 12 may be configured to continue the communication in the cell 2 by using predetermined information that is determined beforehand, when the reception of at least one portion of the broadcast information by the transmission and reception unit 11 is failed, and when the acquisition of the predetermined information from the handover information is failed.

In the first aspect of the embodiment, the control unit 12 may be configured to determine a reception cycle of the broadcast information by the transmission and reception unit 11, based on the predetermined information.

In the first aspect of the embodiment, the control unit 12 may be configured to cause the transmission and reception unit 11 to receive an emergency paging signal (for example, an ETWS paging signal) based on the predetermined information.

In the first aspect of the embodiment, the control unit 12 may be configured to determine a setting value of a timer, based on the predetermined information.

In the first aspect of the embodiment, the predetermined information may be configured to include a network ID (for example, PLMN-ID) relating to the cell 2, a location registration area ID (for example, TA-ID), and a cell ID.

A second aspect of the embodiment is summarized as a mobile communication method in which a mobile station UE communicates in each cell by using predetermined information, the method including the steps of: (A) receiving, at the mobile station UE, broadcast information in a cell 2 after a handover from a cell 1 to the cell 2 in response to received handover information; (B) continuing, at the mobile station UE, the communication in the cell 2 by using the predetermined information included in the received broadcast information; and (C) acquiring, at the mobile station UE, the predetermined information from the handover information, and continuing, at the mobile station UE, the communication in the cell 2 by using the acquired predetermined information, when the reception of at least one portion of the broadcast information is failed.

In the second aspect of the embodiment, in the step (C), the mobile station UE may continue the communication in the cell 2 by using the predetermined information that has been used in the cell 1, when the reception of at least one portion of the broadcast information is failed, and when the acquisition of the predetermined information from the handover information is failed.

In the second aspect of the embodiment, in the step (C), the mobile station UE may continue the communication in the cell 2 by using predetermined information that is determined beforehand, when the reception of at least one portion of the broadcast information is failed, and when the acquisition of the predetermined information from the handover information is failed.

A third aspect of the embodiment is summarized as a mobile station UE configured to communicate in each cell by using predetermined information, including: a transmission and reception unit 11 configured to receive broadcast information present in a cell 2 after a handover from a cell 1 to the cell 2 in response to received handover information; a control unit 12 configured to continue the communication in the cell 2 by using predetermined information included in the received broadcast information, wherein the control unit 12 is configured to acquire the predetermined information from the handover information and to continue the communication in the cell 2 by using the predetermined information that has been used in the cell 1, when the reception of at least one portion of the broadcast information by the transmission and reception unit 11 is failed.

A fourth aspect of the embodiment is summarized as a mobile station UE configured to communicate in each cell by using predetermined information, including: a transmission and reception unit 11 configured to receive broadcast information present in a cell 2 after a handover from a cell 1 to the cell 2 in response to received handover information; a control unit 12 configured to continue the communication in the cell 2 by using predetermined information included in the received broadcast information, wherein the control unit 12 is configured to acquire the predetermined information from the handover information and to continue the communication in the cell 2 by using predetermined information that is determined beforehand, when the reception of at least one portion of the broadcast information by the transmission and reception unit 11 is failed.

A fifth aspect of the embodiment is summarized as a mobile communication method in which a mobile station UE communicates in each cell by using predetermined information, the method including the steps of: receiving, at the mobile station UE, broadcast information in a cell 2 after a handover from a cell 1 to the cell 2 in response to received handover information; continuing, at the mobile station UE, the communication in the cell 2 by using the predetermined information included in the received broadcast information; and acquiring, at the mobile station UE, the predetermined information from the handover information and continuing, at the mobile station UE, the communication in the cell 2 by using the predetermined information that has been used in the cell 1, when the reception of at least one portion of the broadcast information is failed.

A sixth aspect of the embodiment is summarized as a mobile communication method in which a mobile station UE communicates in each cell by using predetermined information, the method including the steps of: receiving, at the mobile station UE, broadcast information in a cell 2 after a handover from a cell 1 to the cell 2 in response to received handover information; continuing, at the mobile station UE, the communication in the cell 2 by using the predetermined information included in the received broadcast information; and acquiring, at the mobile station UE, the predetermined information from the handover information, and continuing, at the mobile station UE, the communication in the cell 2 by using the predetermined information that is determined beforehand, when the reception of at least one portion of the broadcast information is failed.

The operation of the above-described mobile station UE or radio base station eNB may be implemented by a hardware, may also be implemented by a software module executed by a processor, and may further be implemented by the combination of the both.

The software module may be arranged in a storing medium of an arbitrary format such as RAM(Random Access Memory), a flash memory, ROM (Read Only Memory), EPROM (Erasable Programmable ROM) , EEPROM (Electronically Erasable and Programmable ROM), a register, a hard disk, a removable disk, and CD-ROM.

Such a storing medium is connected to the processor so that the processor can write and read information into and from the storing medium. Such a storing medium may also be accumulated in the processor. Such a storing medium and processor may be arranged in ASIC. Such ASIC may be arranged in the mobile station UE and the radio base station eNB. As a discrete component, such a storing medium and processor may be arranged in the mobile station UE and the radio base station eNB.

Thus, the present invention has been explained in detail by using the above-described embodiments; however, it is obvious that for persons skilled in the art, the present invention is not limited to the embodiments explained herein. The present invention can be implemented as a corrected, modified mode without departing from the gist and the scope of the present invention defined by the claims. Therefore, the description of the specification is intended for explaining the example only and does not impose any limited meaning to the present invention.

## Claims

1. A mobile station configured to communicate in each cell by using predetermined information, comprising:
a reception unit configured to receive broadcast information in a second cell after a handover from a first cell to the second cell in response to received handover information; and
a control unit configured to continue the communication in the second cell by using the predetermined information included in the received broadcast information, wherein
the control unit is configured to acquire the predetermined information from the handover information and to continue the communication in the second cell by using the acquired predetermined information, when the reception of at least one portion of the broadcast information by the reception unit is failed.

2. The mobile station according to claim 1, wherein
the control unit is configured to continue the communication in the second cell by using the predetermined information that has been used in the first cell, when the reception of at least one portion of the broadcast information by the reception unit is failed, and when the acquisition of the predetermined information from the handover information is failed.

3. The mobile station according to claim 1, wherein
the control unit is configured to continue the communication in the second cell by using the predetermined information that is determined beforehand, when the reception of at least one portion of the broadcast information by the reception unit is failed, and when the acquisition of the predetermined information from the handover information is failed.

4. The mobile station according to claim 1, wherein
the control unit is configured to determine a reception cycle of the broadcast information by the reception unit, based on the predetermined information.

5. The mobile station according to claim 1, wherein
the control unit is configured to cause the reception unit to receive an emergency paging signal, based on the predetermined information.

6. The mobile station according to claim 1, wherein
the control unit is configured to determine a setting value of a timer, based on the predetermined information.

7. The mobile station according to claim 1, wherein
the predetermined information is configured to include a network ID relating to the second cell, a location registration area ID, and a cell ID.

8. A mobile communication method in which a mobile station communicates in each cell by using predetermined information, the method comprising the steps of:
(A) receiving, at the mobile station, broadcast information in a second cell after a handover from a first cell to the second cell in response to received handover information;
(B) continuing, at the mobile station, the communication in the second cell by using the predetermined information included in the received broadcast information; and
(C) acquiring, at the mobile station, the predetermined information from the handover information, and continuing, at the mobile station, the communication in the second cell by using the acquired predetermined information, when the reception of at least one portion of the broadcast information is failed.

9. A mobile station configured to communicate in each cell by using predetermined information, comprising:
a reception unit configured to receive broadcast information in a second cell after a handover from a first cell to the second cell in response to received handover information; and
a control unit configured to continue the communication in the second cell by using the predetermined information included in the received broadcast information, wherein
the control unit is configured to continue the communication in the second cell by using the predetermined information that has been used in the first cell, when the reception of at least one portion of the broadcast information by the reception unit is failed.

10. A mobile station configured to communicate in each cell by using predetermined information, comprising:
a reception unit configured to receive broadcast information in a second cell after a handover from a first cell to the second cell in response to received handover information; and
a control unit configured to continue the communication in the second cell by using the predetermined information included in the received broadcast information, wherein
the control unit is configured to continue the communication in the second cell by using the predetermined information that is determined beforehand, when the reception of at least one portion of the broadcast information by the reception unit is failed.

11. A mobile communication method in which a mobile station communicates in each cell by using predetermined information, the method comprising the steps of:
receiving, at the mobile station, broadcast information in a second cell after a handover from a first cell to the second cell in response to received handover information;
continuing, at the mobile station, the communication in the second cell by using the predetermined information included in the received broadcast information; and
acquiring, at the mobile station, the predetermined information from the handover information, and continuing, at the mobile station, the communication in the second cell by using the predetermined information that has been used in the first cell, when the reception of at least one portion of the broadcast information is failed.

12. A mobile communication method in which a mobile station communicates in each cell by using predetermined information, the method comprising the steps of:
receiving, at the mobile station, broadcast information in a second cell after a handover from a first cell to the second cell in response to received handover information;
continuing, at the mobile station, the communication in the second cell by using the predetermined information included in the received broadcast information; and
acquiring, at the mobile station, the predetermined information from the handover information, and continuing, at the mobile station, the communication in the second cell by using the predetermined information that is determined beforehand, when the reception of at least one portion of the broadcast information is failed.

13. The mobile communication method according to claim 8, wherein
in the step (C), the mobile station continues the communication in the second cell by using the predetermined information that has been used in the first cell, when the reception of at least one portion of the broadcast information is failed, and when the acquisition of the predetermined information from the handover information is failed.

14. The mobile communication method according to claim 8, wherein
in the step (C), the mobile station continues the communication in the second cell by using the predetermined information that is determined beforehand, when the reception of at least one portion of the broadcast information is failed, and when the acquisition of the predetermined information from the handover information is failed.
